Europäisches Patentamt

(19) European Patent Office

Office européen des brevets

(11) Publication number: **0 038 145**
**B1**

# EUROPEAN PATENT SPECIFICATION

(45) Date of publication of the patent specification:
**07.03.84**

(21) Application number: **81301418.0**

(22) Date of filing: **01.04.81**

(51) Int. Cl.³: **F 16 C 33/46,** F 16 C 19/36

(54) **A conical bearing cage and a bearing assembly comprising such bearing cage.**

(30) Priority: **11.04.80 US 139384**

(43) Date of publication of application:
**21.10.81 Bulletin 81/42**

(45) Publication of the grant of the patent:
**07.03.84 Bulletin 84/10**

(84) Designated Contracting States:
**BE DE FR GB IT NL SE**

(56) References cited:
**GB - A - 817 744**
**US - A - 3 477 773**

(73) Proprietor: **FEDERAL-MOGUL CORPORATION, Legal Department P.O. Box 1966, Detroit, MI 48235 (US)**

(72) Inventor: **Ryanen, Robert M., 8397 Dickert Avenue, Union Lake Michigan 48085 (US)**

(74) Representative: **Wisher, Michael Frederick et al, Urquhart-Dykes & Lord 47 Marylebone Lane, London W1M 6DL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

A conical bearing cage and a bearing assembly
comprising such bearing cage

This invention relates to conical bearing cages for tapered bearing assemblies and to tapered bearing assemblies comprising such bearing cages. The conical bearing cages may have a plurality of circumferentially spaced pockets for receiving roller bearing elements, and a race may be disposed within the bearing cage and in rolling engagement with the roller bearing elements. The cage maintains the proper spacing between adjacent rollers and maintains the rollers in the pockets for rolling engagement with the inner race.

Conical bearing cages have previously been proposed in, for example, US patent 4,136,916 (Musselman) where the cage is described as being stamped, die cast or formed by powder techniques from metal or injection moulded in plastics. Where the cage of US patent 4,136,916 is injection moulded in plastics, a three-piece mould comprising a centre core and two radially operable C-shaped mould halves is required. After moulding, the cage has to be pulled off the centre core.

In GB 817,744 there is disclosed a cage for a taper-roller bearing, the cage being of nylon and comprising larger and smaller rings joined by bars or bridges. In one embodiment the bridges are recessed at one end adjacent to the larger rings.

However, these prior proposals suffer from inadequate rigidity of the bearing cage assembly whereby in some cases the edges of the bridges or bars tend to flex when loaded in the axial direction and hence tend to contact the race of the outer ring. Such axial loading is a dynamic condition that can occur during certain bearing operating conditions and the result is to cause damage to the bridge or bar edges or lips and to reduce the bearing life. A further shortcoming of these prior proposals lies in their susceptibility to damage during handling.

An object of the present invention is to provide a conical bearing cage offering improvements in relation to one or more of the technical problems identified above.

According to the invention there is provided a conical bearing cage for a tapered bearing assembly as defined in the accompanying claims.

In an embodiment of the invention described below there is provided a conical bearing cage for a tapered bearing assembly which may be efficiently and economically manufactured, has the desired performance characteristics and is of the requisite strength and is yet light in weight. The cage is an integral member having a central axis including large and small circular rings interconnected by a plurality of circumferentially spaced bridges. Each of the bridges has top and bottom surfaces interconnected by spaced sides with the sides of the bridges including a tapered portion extending inwardly from the top surface thereof to define lips, with a rib disposed on the top surface of each bridge and extending along the full length of the bridge between the large and small rings. Preferably the cage is moulded of a plastics material, and where the outer circumferential surface of the small ring is of a smaller diameter than the diameter of the inner circumferential surface of the large ring, it may be injection moulded in a two-piece mould which opens and closes axially.

An embodiment of the invention will now be described by way of example with reference to the accompanying drawings in which:

Fig. 1 is a fragmentary cross-sectional view of a tapered roller bearing assembly including a bearing cage;

Fig. 2 is a fragmentary cross-sectional view of a portion of the bearing cage shown in Fig. 1;

Fig. 3 is a fragmentary view taken substantially along line 3-3 of Fig. 1 and showing the roller bearing elements in phantom;

Fig. 4 is a fragmentary cross-sectional view taken substantially along line 4-4 of Fig. 2; and

Fig. 5 is a fragmentary cross-sectional view taken substantially along line 5-5 of Fig. 2.

A conical bearing cage constructed in accordance with the subject invention is generally indicated at 10. The conical bearing cage 10 is utilized in a tapered bearing assembly generally shown at 12. The tapered bearing assembly 12 also includes a plurality of individually tapered roller bearings spaced about the assembly and in rolling engagement with an inner bearing race which has shoulders at either end thereof for retaining the roller bearings axially positioned. The individual roller bearings are of the well-known type and the inner race may be of various well-known configurations.

The cage 10 is an integral plastics member having a central axis. The cage 10 includes a large first circular ring 14 having an inner circumferential surface 16 and an outer circumferential surface 18 connected by inner and outer faces 20 and 22, respectively. The cage also includes a small second circular ring 24 having an inner circumferential surface 26 and an outer circumferential surface 28 connected by inner and outer faces 30 and 32 respectively.

A plurality of circumferentially spaced bridges 34 interconnect the rings 14 and 24. Each of the bridges 34 has top and bottom surfaces 36 and 38, respectively, which are interconnected by spaced sides. The spaced sides of each of the bridges 34 have a tapered portion 40 extending inwardly from the top surface 36 thereof to define lips 42 at the intersection of each side and the associated top surface 36.

A reinforcing rib 44 is disposed on the top surface 36 of each bridge 34 and extends between the rings 14 and 24. Each of the ribs 44 includes a pair of spaced sides 46 interconnected by a top surface 48. The sides 46 are spaced inwardly from the lips 42 so that the ribs 44 will not interfere with the action of the lips 42, i.e. the coaction of the lips 42 with the respective roller bearing elements. The top surface 48 of each rib 44 is substantially coextensive with the outer circumferential surfaces 18 and 28 of the rings 14 and 24 to define an outer conical surface extending between the faces 20 and 30 of the rings 14 and 24. In other words, the top surface of each rib 44 is substantially an extension of the outer circumferential surface 18 of the large ring and tapers into or blends into the outer circumferential surface 28 of the small ring 24.

The top surface 36 of each bridge 34 is substantially coextensive with the outer circumferential surface 28 of the small ring 24 and extends to a position below the outer circumferential surface 18 of the large ring 14. Said another way, the top surface 36 of each bridge 34 diverges from the top surface 48 of each rib 44 in a direction extending from the small ring 24 to the large ring 14 and terminates at the inner face 20 of the large ring 14 at a position substantially aligned with the inner circumferential surface 16 of the large ring 14.

The spaced sides 46 of each of the ribs 44 are parallel to the central axis of the cage and the outer circumferential surface 28 of the small ring 24 is of a smaller diameter than the diameter of the inner circumferential surface 16 of the large ring 14. Further, the inner circumferential surfaces 16 and 26 of the rings 14 and 24 are each parallel to the central axis of the cage so as to be concentric with the central axis. The ribs 44 provide structural integrity to the cage and are constructed, along with the relative positions of the inner and outer surfaces of the respective rings, so that two axially opening mould halves may be utilized for injection moulding the cage of plastics. It will be appreciated that the use of only two mould halves which open and close axially for making the cage is a significant manufacturing advantage.

The outer faces 22 and 32 of the rings 14 and 24 are substantially perpendicular to the central axis. However, the inner faces 20 and 30 of the rings 14 and 24 are parallel to one another and extend transversely to the outer conical surface, i.e. the top surface 48 of each rib 44. The inner faces 20 and 30 are substantially perpendicular to the centre line of the roller to be retained by the cage but may be off from perpendicular by a few degrees. As will be appreciated, the inner faces 20 and 30 are disposed adjacent to the ends of the respective roller elements for limiting axial movement of the roller elements.

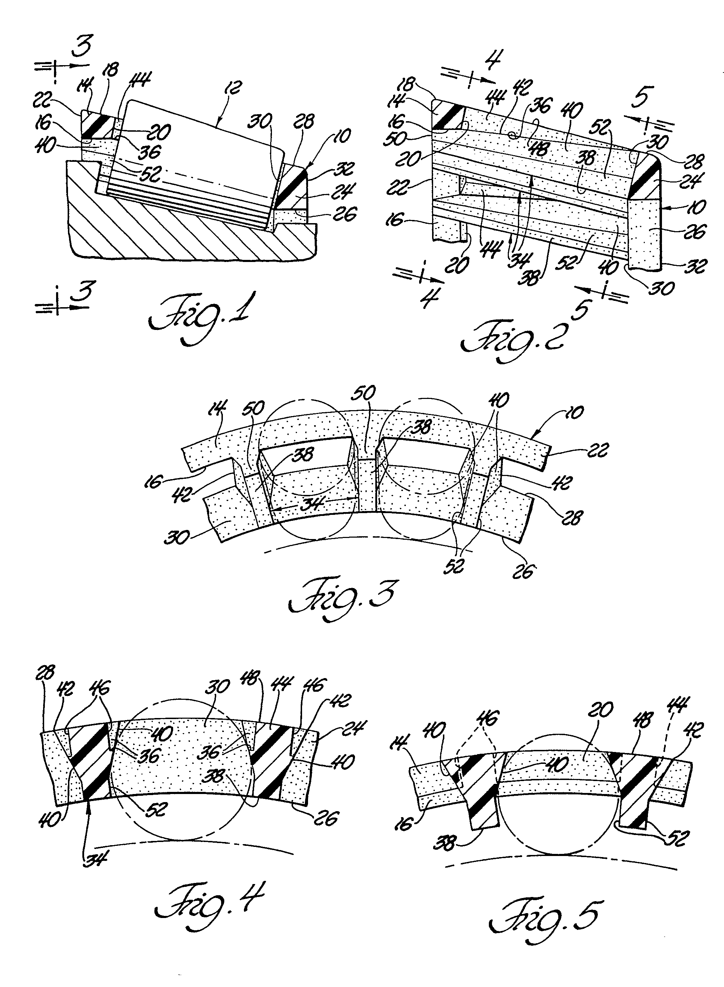

One end 50 of each of the bridges 34 extends radially inwardly from the inner circumferential surface 16 of the large ring 14, the ends 50 of the bridges being coplanar with the outer face 22 of the large ring 14. The sides of each bridge 34 extend upwardly from the bottom surface 38 of the bridge 34 in generally parallel portions 52 and then through the tapered portions 40 thereof to the lips 42 whereby each bridge 34 has a cross section generally in the form of a Y. The lips 42 of each top surface 36 converge in a direction extending from the small ring 24 to the large ring 14 as is best illustrated in Fig. 3. Such convergence accommodates the tapered roller elements for retaining and circumferentially spacing the roller elements.

## Claims

1. A conical bearing cage (10) for a tapered bearing assembly (12) comprising: an integral member having a central axis and including first and second circular rings (14) and (24) respectively having inner (16, 26) and outer (18, 28) circumferential surfaces connected by inner (20, 30) and outer (22, 32) faces, the first ring (14) being of larger radius than the second ring (24), a plurality of circumferentially spaced bridges (34) interconnecting said rings (14, 24), each of said bridges (34) having top (36) and bottom (38) surfaces interconnected by spaced sides, said sides of each of said bridges (34) having a tapered portion (40) extending inwardly from said top surface (36) thereof for defining lips (42) at the intersection of each side and the associated top surface (36), a rib (44) being provided on said top surface (36) of each bridge (34), and said lips (42) being disposed radially inwardly of the top surface (48) of each of said ribs (44) at the juncture thereof with said first ring (14) characterized in that said rib extends from said first ring (14) to said second ring (24) and said lips (42) diverge to a common radial juncture with said top surface (48) of said rib adjacent to the outer circumferential surface of said second ring (24).

2. A cage according to claim 1, characterized in that each of said ribs (44) includes two spaced sides (46) interconnected by said top surface (48), said spaced sides (46) being spaced inwardly from said lips (42).

3. A cage according to claim 2, characterized in that the top surface (48) of each rib (44) is substantially coextensive with said outer circumferential surfaces (18, 28) of said rings (14, 24) and defines an outer conical surface extending between said outer faces (22, 32) of said rings (14, 24).

4. A cage according to any one of claims 1 to 3, characterized in that the top surface (36) of each bridge (34) is substantially coextensive with said outer circumferential surface (28) of said second ring (24) and extends to a position below said outer circumferential surface (18) of said first ring (14).

5. A cage according to any one of the preceding claims, characterized in that the spaced sides (46) of each of said ribs (44) are parallel to said central axis.

6. A cage according to any one of the preceding claims, characterized in that it consists of plastics material and in that said outer circumferential surface (28) of said second ring (24) is of a smaller diameter than the diameter of said inner circumferential surface (16) of said first ring (14).

7. A cage according to any one of the preceding claims, characterized in that the inner circumferential surfaces (16, 26) of said rings (14, 24) are each parallel to said central axis so as to be concentric with said central axis.

8. A cage according to any one of the preceding claims, characterized in that the axially outer faces (22, 32) of said rings (14, 24) are substantially perpendicular to said central axis.

9. A cage according to any one of the preceding claims, characterized in that the axially inner faces (20, 30) of said rings (14, 24) are parallel to each other and perpendicular to the central axis of the roller to be retained in a pocket defined between two adjacent bridges (34).

10. A cage according to any one of the preceding claims, characterized in that one end (50) of each of said bridges (34) extends radially inwardly from said inner circumferential surface (16) of said first ring (14), in that each of said spaced sides of each bridge (34) extend upwardly from the bottom surface (38) of the bridge (34) in generally parallel portions (52) and then through said tapered portions (40) thereof to said lip (42) whereby each bridge (34) has a cross section generally in the form of a Y, and in that said lips (42) of each top surface (36) converge in the direction extending from said second ring (24) to said first ring (14).

11. A tapered bearing assembly, characterized in that it comprises a bearing cage according to any one of the preceding claims, a roller bearing in each pocket between adjacent bridges (34) and a bearing race within the cage and engaging the roller bearings to retain them in the respective pockets.

## Patentansprüche

1. Konischer Lagerkäfig (10) für eine Kegellager-Anordnung (12) mit einem eine zentrale Achse aufweisenden integralen Glied bestehend aus einem ersten und einem zweiten kreisförmigen Ring (14) und (24) mit je einer inneren (16, 26) und einer äusseren (18, 28) Umfangsfläche, die jeweils durch eine innere (20, 30) und eine äussere Fläche (22, 32) miteinander verbunden sind, wobei der erste Ring (14) einen grösseren Radius als der zweite Ring (24) aufweist, und aus einer Mehrzahl von im Abstand voneinander längs des Umfanges zwischen diesen Ringen (14, 24) angeordneten Brücken (34), von denen jede eine obere (36) und eine untere (38) Fläche besitzt, die durch Seitenwandungen verbunden sind, wobei jede dieser Seitenwandungen einen abgeschrägten Abschnitt (40) besitzt, der sich nach innen erstreckt und jeweils an der Durchdringung einer jeden Wandung mit der oberen Fläche (36) eine Lippe (42) definiert, und aus je einer Rippe (44) an der oberen Fläche (36) einer jeden Brücke (34), wobei die Lippen (42) radial nach innen gerichtet an der oberen Fläche (48) einer jeden Rippe (44) an deren Verbindungsstelle mit dem ersten Ring (14) angeordnet sind, dadurch gekennzeichnet, dass die Rippen (44) sich zwischen dem ersten und zweiten Ring (14, 24) erstrecken, und dass die Lippen (42) zu einer gemeinsamen radialen Verbindung mit der oberen Fläche (48) der Rippen der äusseren Umfangsfläche des zweiten Ringes (24) benachbart divergieren.

2. Lagerkäfig nach Anspruch 1, dadurch gekennzeichnet, dass jede der Rippen (44) zwei durch die obere Fläche (48) verbundene Seitenwandungen (46) umfasst, die an der Innenseite durch die Lippen (42) jeweils unterteilt sind.

3. Lagerkäfig nach Anspruch 2, dadurch gekennzeichnet, dass die oberen Flächen (48) der Rippen (44) sich im wesentlichen gleich zu den äusseren Umfangsflächen (18, 28) der Ringe (14, 24) erstrecken und eine äussere konische Fläche definieren, die sich zwischen den äusseren Flächen (22, 32) der Ringe (14, 24) erstreckt.

4. Lagerkäfig nach einem der Ansprüche 1 bis 3, dadurch gekennzeichnet, dass die obere Fläche (36) einer jeden Brücke (34) im wesentlichen gleichgerichtet zu der äusseren Umfangsfläche (28) des zweiten Ringes (24) verläuft und sich bis zu einer Position unterhalb der äusseren Umfangsfläche (18) des ersten Ringes (14) erstreckt.

5. Lagerkäfig nach einem der vorhergehenden Ansprüche, dadurch gekennzeichnet, dass die Seitenwandungen (46) einer jeden Rippe (44) parallel zur zentralen Achse sind.

6. Lagerkäfig nach einem der vorhergehenden Ansprüche, dadurch gekennzeichnet, dass er aus Kunststoff gefertigt ist und dass der Durchmesser der äusseren Umfangsfläche (28) des zweiten Ringes (24) kleiner als der Durchmesser der inneren Umfangsfläche (16) des ersten Ringes (14) ist.

7. Lagerkäfig nach einem der vorhergehenden Ansprüche, dadurch gekennzeichnet, dass die inneren Umfangsflächen (16, 26) der Ringe (14, 24) jeweils parallel und konzentrisch zur zentralen Achse sind.

8. Käfig nach einem der vorhergehenden Ansprüche, dadurch gekennzeichnet, dass die axialen äusseren Flächen (22, 33) der Ringe (14, 24) im wesentlichen rechtwinklig zu der zentralen Achse sind.

9. Lagerkäfig nach einem der vorhergehenden Ansprüche, dadurch gekennzeichnet, dass die axialen inneren Flächen (20, 30) der Ringe (14, 24) parallel zueinander und rechtwinklig zur zentralen Achse der zwischen zwei benachbarten Brücken (34) gehaltenen Lagerrollen sind.

10. Käfig nach einem der vorhergehenden Ansprüche, dadurch gekennzeichnet, dass ein Ende (50) einer jeden Brücke (34) von der inneren Umfangsfläche (16) des ersten Ringes (14) aus radial nach innen ragt, so dass jede der Seitenwände einer jeden Brücke (34) aufrechtstehend zur unteren Fläche (38) ist und in im wesentlichen parallele Abschnitte (52) und anschliessend durch die schrägen Abschnitte (40) in die Lippen (42) übergeht, wobei jede Brücke (34) einen im wesentlichen Y-förmigen Querschnitt aufweist, und dass die Lippen (42) einer jeden oberen Fläche (36) in Richtung vom zweiten Ring (24) zum ersten Ring (14) konvergieren.

11. Kegellager-Anordnung gekennzeichnet durch einen Lagerkäfig nach einem der vorhergehenden Ansprüche 1 bis 10, durch eine in jeder zwischen zwei Brücken (34) gebildeten Tasche angeordneten Lagerrolle und durch eine Lauffläche innerhalb des die Rollen zwecks Halterung in den Taschen umfassenden Lagerkäfigs.

## Revendications

1. Cage de roulement conique (10) pour un roulement conique (12), comprenant: une pièce monobloc à axe central comportant des premier et deuxième anneaux circulaires (14) et (24) respectivement, qui présentent des surfaces circonférentielles intérieures (16, 26) et extérieures (18, 28) connectées par des faces intérieures (20, 30) et extérieures (22, 32), le premier anneau (14) étant de rayon plus grand que le deuxième anneau (24), une pluralité de ponts (34) circonférentiellement espacés interconnectant les anneaux (14, 24), chacun des ponts (34) présentant des surfaces supérieure (36) et inférieure (38) interconnectées par des faces latérales espacées, lesdites faces latérales de chacun des ponts (34) comprenant une partie inclinée (40) qui s'étend vers l'intérieur à partir de la surface supérieure (36) du pont, de manière à définir des lèvres (42) à l'intersection de chaque face latérale et de la surface supérieure (36) associée, une nervure (44) étant prévue sur la surface supérieure (36) de chaque pont (34) et les lèvres (42) étant disposées radialement vers l'intérieur de la surface supérieure (48) de chacune des nervures (44) à sa jonction avec le premier anneau (14), caractérisée en ce que la nervure s'étend du premier anneau (14) au deuxième anneau (24) et les lèvres (42) divergent jusqu'à une jonction radiale commune avec la surface supérieure (48) de la nervure, près de la surface circonférentielle extérieure du deuxième anneau (24).

2. Cage suivant la revendication 1, caractérisée en ce que chacune des nervures (44) comprend deux faces latérales espacées (46) interconnectées par la surface supérieure (48), les faces latérales espacées (46) étant espacées des lèvres (42), vers l'intérieur.

3. Cage suivant la revendication 2, caractérisée en ce que la surface supérieure (48) de chaque nervure (44) est sensiblement coextensive avec les surfaces circonférentielles extérieures (18, 28) des anneaux (14, 24) et définit une surface conique extérieure s'étendant entre les faces extérieures (22, 32) des anneaux (14, 24).

4. Cage suivant l'une quelconque des revendications 1 à 3, caractérisée en ce que la surface supérieure (36) de chaque pont (34) est sensiblement coextensive avec la surface circonférentielle extérieure (28) dudit deuxième anneau (24) et s'étend à une position située au-dessous de la surface circonférentielle extérieure (18) dudit premier anneau (14).

5. Cage suivant l'une quelconque des revendications précédentes, caractérisée en ce que les faces latérales espacées (46) de chacune des nervures (44) sont parallèles à l'axe central.

6. Cage suivant l'une quelconque des revendications précédentes, caractérisée en ce qu'elle est en matière plastique et en ce que la surface circonférentielle extérieure (28) dudit deuxième anneau (24) est de diamètre inférieure au diamètre de la surface circonférentielle intérieure (16) dudit premier anneau (14).

7. Cage suivant l'une quelconque des revendications précédentes, caractérisée en ce que les surfaces circonférentielles intérieures (16, 26) des anneaux (14, 24) sont parallèles, l'une et l'autre, à l'axe central, de façon à être concentriques à cet axe central.

8. Cage suivant l'une quelconque des revendications précédentes, caractérisée en ce que les faces axialement extérieures (22, 32) des anneaux (14, 24) sont sensiblement perpendiculaires à l'axe central.

9. Cage suivant l'une quelconque des revendications précédentes, caractérisée en ce que les faces axialement intérieures (20, 30) des anneaux (14, 24) sont parallèles l'une à l'autre et perpendiculaires à l'axe central du rouleau qui doit être retenu dans une poche définie entre deux ponts adjacents (34).

10. Cage suivant l'une quelconque des revendications précédentes, caractérisée en ce qu'une extrémité (50) de chacun des ponts (34) s'étend radialement vers l'intérieur, à partir de la surface circonférentielle intérieure (16) dudit premier anneau (14), en ce que chacune des faces latérales espacées de chaque pont (34) s'étend vers le haut, à partir de la surface inférieure (38) du pont (34), dans des parties (52) sensiblement parallèles puis, par l'intermédiaire desdites parties inclinées (40), jusqu'à la lèvre (42), de sorte que chaque pont (34) a une section transversale sensiblement en forme de Y, et en ce que les lèvres (42) de chaque surface supérieure (36) convergent dans la direction s'étendant dudit deuxième anneau (24) audit premier anneau (14).

11. Roulement conique, caractérisé en ce qu'il comprend une cage de roulement suivant l'une quelconque des revendications précédentes, un rouleau logé dans chaque poche définie entre des ponts adjacents (34), et un chemin de roulement placé dans la cage et en contact avec les rouleaux pour les retenir dans les poches respectives.

Fig.1

Fig.2

Fig.3

Fig.4

Fig.5